# EUROPÄISCHE PATENTSCHRIFT

(11) **EP 3 766 138 B1**
(45) Veröffentlichungstag und Bekanntmachung des Hinweises auf die Patenterteilung: **03.07.2024**
(21) Anmeldenummer: 19705503.1
(22) Anmeldetag: 15.02.2019
(51) Int. Cl.: H01R 13/26, H01F 5/04, H01R 13/627, H01R 13/33

(54) **VORRICHTUNG ZUR HERSTELLUNG EINER VERBINDUNG SOWIE ANORDNUNG**
DEVICE FOR ESTABLISHING A CONNECTION, AND ARRANGEMENT
DISPOSITIF POUR RÉALISER UNE LIAISON AINSI QUE SYSTÈME

(30) Priorität: 15.03.2018 DE 102018203991
(43) Veröffentlichungstag der Anmeldung: 20.01.2021
(73) Patentinhaber: ZF Friedrichshafen AG, 88046 Friedrichshafen (DE)
(72) Erfinder: MOOSMANN, Markus, 88287 Grünkraut (DE); PAWLAK, Florian, 88048 Friedrichshafen (DE); NUSSER, Tobias, 88045 Friedrichshafen (DE); MAYR, Karlheinz, 6900 Bregenz (AT); SCHMIDT, Thilo, 88074 Meckenbeuren (DE)
(86) Internationale Anmeldenummer: PCT/EP2019/053771
(87) Internationale Veröffentlichungsnummer: WO 2019/174853

(56) Entgegenhaltungen:
- DE-A1- 10 337 197
- US-A- 3 101 231
- US-A- 4 146 287
- US-A- 4 946 406

## Beschreibung

Die Erfindung betrifft einen Aktor für eine Getriebesteuerung eines Getriebes mit einer Vorrichtung zur Herstellung einer elektrischen und einer mechanische Verbindung mit dem Aktor nach dem Oberbegriff des Patentanspruches 1.

Durch die DE 103 37 197 A1 wurde eine Anordnung zum elektrischen Kontaktieren eines Elektromagnetventils bekannt, welches in einem Kontaktgehäuse angeordnete Kontaktelemente aufweist, welche mit einer auf einem Trägerelement angeordneten Leiterplatte kontaktiert werden. Die Leiterplatte weist Gegenkontaktelemente auf, welche mit den Kontaktelementen des Elektromagnetventils Druckkontakte bilden. In dem Trägerelement sind nutförmige Ausnehmungen vorgesehen, in welche die Stirnseiten des Ventilgehäuses eingreifen, wodurch eine Labyrinthdichtung gebildet wird, welche das Eindringen von Schmutzpartikeln, insbesondere Metallspänen in das Kontaktgehäuse verhindern soll.

Eine Aufgabe der Erfindung besteht darin, eine elektrische und eine mechanische Verbindung mit einem Aktor, vorzugsweise eines hydraulischen Schaltgerätes herzustellen.

Die Erfindung umfasst die Merkmale des unabhängigen Patentanspruchs 1.

Vorteilhafte Ausgestaltungen ergeben sich aus den Unteransprüchen.

Erfindungsgemäß ist ein Aktor für eine Getriebesteuerung eines Getriebes mit einer Vorrichtung zur Herstellung einer elektrischen und mechanischen Verbindung mit dem Aktor vorgesehen, wobei die Vorrichtung durch ein Steckelement, welche ein Gehäuse und zwei in dem Gehäuse angeordnete und fixierte Kontaktfederdrähte aufweist, wobei das Gehäuse seitlich angeordnete Öffnungen aufweist und wobei die Kontaktfederdrähte im Bereich der seitlichen Öffnungen Feder-Druckkontakte bilden. Die Kontaktfederdrähte treten im Bereich der seitlichen Öffnungen als elastisch verformbare Bögen aus dem Gehäuse aus und können durch eine Steckbewegung mit entsprechenden Gegenkontakten kontaktiert werden. Der Aktor ist vorzugsweise ein Elektromagnetventil, beispielsweise für ein hydraulisches Schaltgerät.

Nach einer bevorzugten Ausführungsform sind die Kontaktfederdrähte mit elektrischen Leitungen, die zu einer Leiterplatte führen, verbunden. Bei bestimmten Einbausituationen sind einzelne Aktoren unterschiedlich positioniert, d. h. mit unterschiedlichen Abständen zur Leiterplatte angeordnet. Für diesen Fall ist das Steckelement besonders geeignet, da die Längen der elektrischen Leitungen an die unterschiedlichen Abstände angepasst werden können.

Nach einer weiteren bevorzugten Ausführungsform weist das Steckelement eine Längs- oder Steckachse auf, welche der Steckrichtung bei der elektrischen und mechanischen Verbindungen entspricht. Die Druckrichtung der beiden elektrischen Feder-Druckkontakte verläuft im Wesentlichen senkrecht zur Längsachse des Steckelements und in derselben Ebene. Damit wird der Vorteil einer flachen Bauweise für das Steckelement erreicht.

Nach einer weiteren bevorzugten Ausführungsform weist das Steckelement Rast- oder Schnappelemente auf, d. h. das Steckelement kann mit einer einfachen Steckbewegung, ohne weitere Hilfsmittel, mit dem Aktor mechanisch verbunden werden. Mit der mechanischen Verbindung, d. h. einer Schnapp- oder Rastverbindung wird gleichzeitig der elektrische Kontakt durch Federdruck hergestellt.

Nach einer weiteren bevorzugten Ausführungsform umfasst das Steckelement zwei miteinander fügbare Gehäusehälften, in welchen die beiden Kontaktfederdrähte formschlüssig aufgenommen und fixiert sind. Vorzugsweise sind die beiden Gehäusehälften als Kunststoffspritzgussteile mit vorgeformten Ausnehmungen oder Vertiefungen für die Kontaktfederdrähte ausgebildet. Da die Kontaktfederdrähte nebeneinander in derselben Ebene zwischen den Gehäusehälften angeordnet sind, ergibt sich eine flache Bauweise für das gesamte Gehäuse.

Nach einer weiteren bevorzugten Ausführungsform ist zwischen den seitlich angeordneten elektrischen Kontakten eine Labyrinthdichtung angeordnet, welche sich in Längsrichtung des Steckelements erstreckt. Die Labyrinthdichtung verhindert, dass leitende Partikel, z.B. im Getriebeöl schwimmende Metallspäne von einer Kontaktseite auf die andere Kontaktseite gelangen und somit eine elektrisch leitende Brücke herstellen können, was zu einem Kurzschluss führen könnte.

Nach einer weiteren bevorzugten Ausführungsform ist die Labyrinthdichtung einerseits als nutförmige Ausnehmung oder Nut und andererseits als in die Nut eingreifender Steg ausgebildet. Damit ergibt sich eine wirksame, in das Steckelement integrierte Dichtung, die ohne zusätzliche Dichtelemente auskommt. Vorzugsweise ist die durchgehende Labyrinthdichtung mittig zwischen den beiden spiegelbildlich angeordneten Kontaktfederdrähten angeordnet, die somit elektrisch gegeneinander isoliert sind.

Erfindungsgemäß ist ferner vorgesehen, dass der Aktor auf seiner Stirnseite ein Kontaktgehäuse aufweist, in welches das Steckelement einsteckbar und fixierbar ist, wobei bevorzugt die Steckrichtung quer zur Längsachse des Aktors erfolgt. Dadurch ergibt sich ein flaches Kontaktgehäuse, welches wenig Bauraum beansprucht. Das Steckelement mit den angeschlossenen elektrischen Leitungen überbrückt den räumlichen Abstand, welcher aufgrund der Einbausituation zwischen dem Aktor und der Leiterplatte besteht.

Nach einer weiteren bevorzugten Ausführungsform sind die Anschlusskontakte des Aktors als stirnseitig angeordnete Kontaktstifte ausgebildet, die von den Feder-Druckkontakten des Steckelements kontaktiert werden. Dabei werden die quer wirkenden Kontaktdrücke bzw. -kräfte von den Kontaktstiften aufgenommen.

Nach einer weiteren bevorzugten Ausführungsform weist das Kontaktgehäuse als Rast- oder Schnappelemente ausgebildete mechanische Verbindungselemente auf, die mit den Rast- oder Schnappelementen des Steckelements korrespondieren. Damit wird erreicht, dass das Steckelement mittels einer Rast- oder Schnappverbindung mit dem Aktor mechanisch verbunden und elektrisch kontaktiert werden kann.

Nach einer weiteren bevorzugten Ausführungsform sind zwischen dem Kontaktgehäuse und dem Steckelement Labyrinthdichtungen angeordnet, die vorzugsweise als Stege und Nuten ausgebildet sind und einen weiteren Spanschutz auf der Außenseite des Steckelements bilden.

Die Erfindung umfasst einen Aktor für eine Getriebesteuerung eines Getriebes mit einer Vorrichtung zur Herstellung einer elektrischen und mechanischen Verbindung mit dem Aktor. Bei dem Getriebe kann es sich demnach um ein beliebiges Fahrzeuggetriebe handeln, das einen solchen Aktor und eine solche Getriebesteuerung aufweist. Ein solches Fahrzeuggetriebe ist insbesondere ein Automatikgetriebe oder ein automatisiertes Schaltgetriebe. Hierzu zählt auch ein Doppelkupplungsgetriebe oder ein Getriebe mit einem hydrodynamischen Drehmomentwandler oder eine Mischform hiervon oder ein hydrostatisches Getriebe. Bei dem Fahrzeuggetriebe kann es sich jedoch auch um ein Verteilergetriebe handeln, wie beispielsweise eines Allradantriebsstrangs für ein Kraftfahrzeug, oder es kann sich auch um ein Wendegetriebe für ein Schienenfahrzeug handeln.

Ausführungsbeispiele der Erfindung sind in der Zeichnung dargestellt und werden im Folgenden näher beschrieben, wobei sich aus der Beschreibung und/oder der Zeichnung weitere Merkmale und/oder Vorteile ergeben können. Es zeigen
- Fig. 1: ein erstes Ausführungsbeispiel der Erfindung für ein Steckelement mit Anschlussleitungen,
- Fig. 2: Einzelteile des Steckelements gemäß Fig. 1,
- Fig. 3: eine elektrische und mechanische Verbindung zwischen dem Steckelement und einem Aktor,
- Fig. 4: ein zweites Ausführungsbeispiel der Erfindung für ein abgewandeltes Steckelement,
- Fig. 5: Einzelteile des Steckelements gemäß Fig. 4 und
- Fig. 6: eine Anordnung zur elektrischen und mechanischen Verbindung zwischen dem Steckelement und einem Aktor.

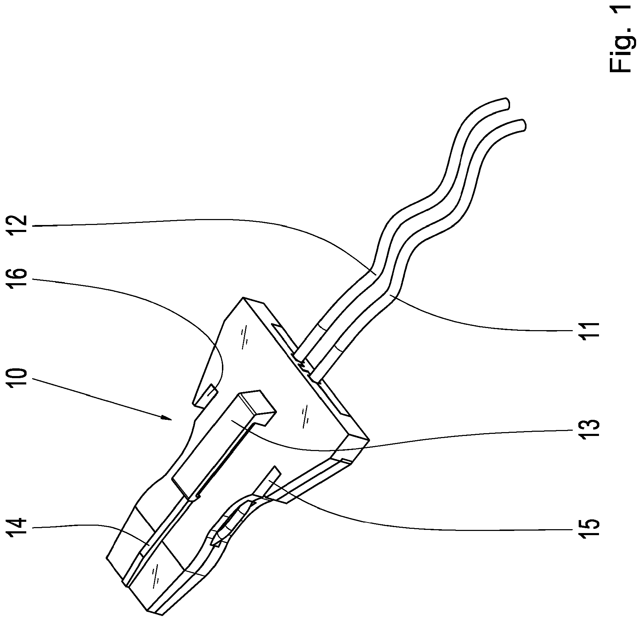

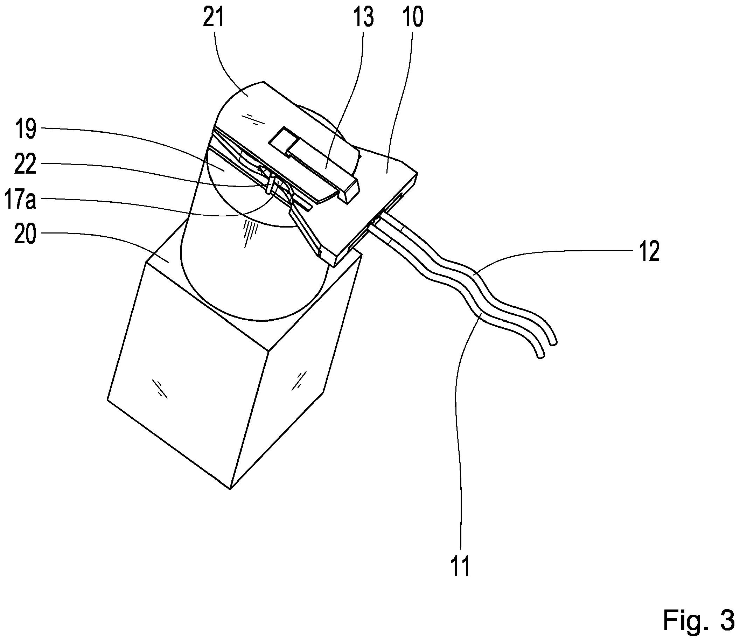

Fig. 1 zeigt als erstes Ausführungsbeispiel der Erfindung ein Steckelement 10, welches für eine elektrische Kontaktierung eines hier nicht dargestellten Aktors vorgesehen ist, vorzugsweise eines hydraulischen Schaltgeräts eines Getriebes für Kraftfahrzeuge. Das Steckelement 10 weist zwei Anschlussleitungen 11, 12 beliebiger Länge auf, welche endseitig mit einer nicht dargestellten elektronischen Schaltungsanordnung, insbesondere einer Leiterplatte einer Elektronischen Getriebesteuerung (EGS) verbunden werden können. Das Steckelement 10 ist für Aktoren vorgesehen, welche in einem größeren räumlichen Abstand in Bezug auf die Leiterplatte angeordnet sind. Auf der in der Zeichnung sichtbaren Oberseite des Steckelements 10 ist eine Halterklammer 13, auch Rastnase 13 genannt, für eine Fixierung des Steckelements 10 gegenüber einem Kontaktgehäuse 21 (Fig. 3) angeordnet. Ferner ist auf der Oberseite des Steckelements 10 ein Steg 14 angeordnet, welcher Teil einer Labyrinthdichtung ist und in eine nicht dargestellte Nut im Kontaktgehäuse 21 (Fig. 3) eingreift. Das Steckelement 10 weist ferner seitliche Führungsschlitze 15, 16 auf, welche der Längsführung und Fixierung des Steckelements 10 gegenüber dem Kontaktgehäuse 21 (Fig. 3) dienen.

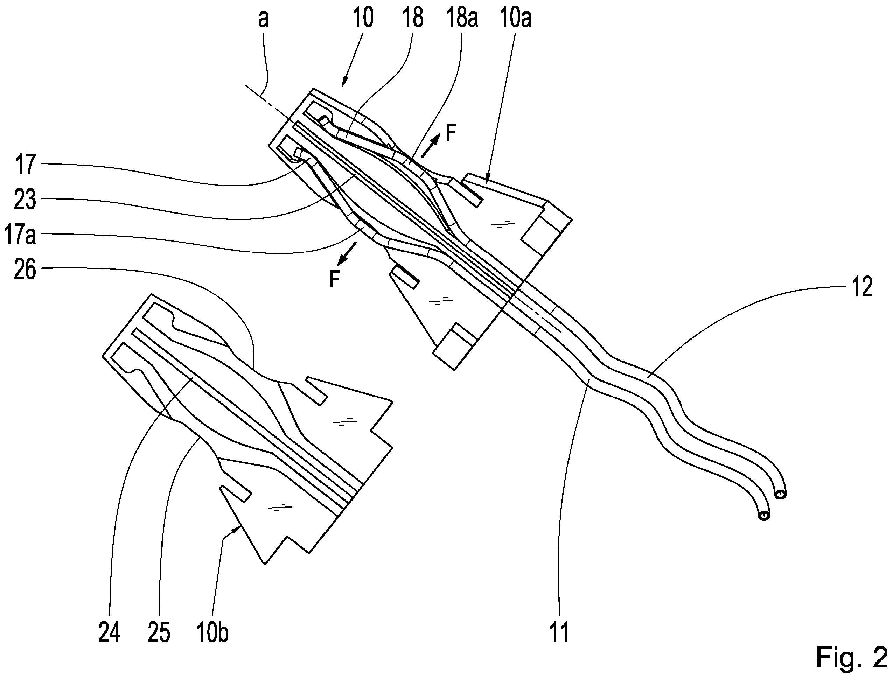

Fig. 2 zeigt das Steckelement 10 mit seinen Einzelteilen, nämlich einer ersten Gehäusehälfte 10a, einer zweiten Gehäusehälfte 10b sowie Kontaktfederdrähten 17, 18, welche federnde, nach außen tretende Feder-Druckkontakte 17a, 18a bilden. Das Steckelement 10 weist eine Längs- oder Steckachse a auf und wird in Richtung der Steckachse a in das Kontaktgehäuse 21 (Fig. 3) eingeführt. Die Druckrichtung der Feder-Druckkontakte 17a, 18a, die als bogenförmige Biegefedern ausgebildet sind, ist durch Pfeile F gekennzeichnet, d. h. quer zur Längsachse a. Hierzu weisen beide Gehäusehälften 10a, 10b seitliche Öffnungen 25, 26 auf. Die Kontaktfederdrähte 17, 18, welche von den beiden Gehäusehälften 10a, 10b formschlüssig in Vertiefungen (ohne Bezugszahl) aufgenommen werden, sind mit den Anschlussleitungen 11, 12 elektrisch leitend verbunden.

Fig. 3 zeigt die Verbindung des Steckelements 10 mit einem Aktor 19, welcher auf einem Gehäuse 20, vorzugsweise einem hydraulischen Schaltgerät 20, angeordnet ist. Auf der Stirnseite des Aktors 19, vorzugsweise einem Elektromagnetventil 19, ist ein Kontaktgehäuse 21 angeordnet, welches das Steckelement 10 teilweise in sich aufnimmt, wobei das Steckelement 10 durch die verrastbare Halteklammer 13 in seiner Position in Längsrichtung gesichert ist. Der Aktor 19 weist zwei Kontaktstifte auf, von denen nur der Kontaktstift 22 sichtbar ist, welcher mit dem elektrischen Kontakt 17a in Druckkontakt steht.

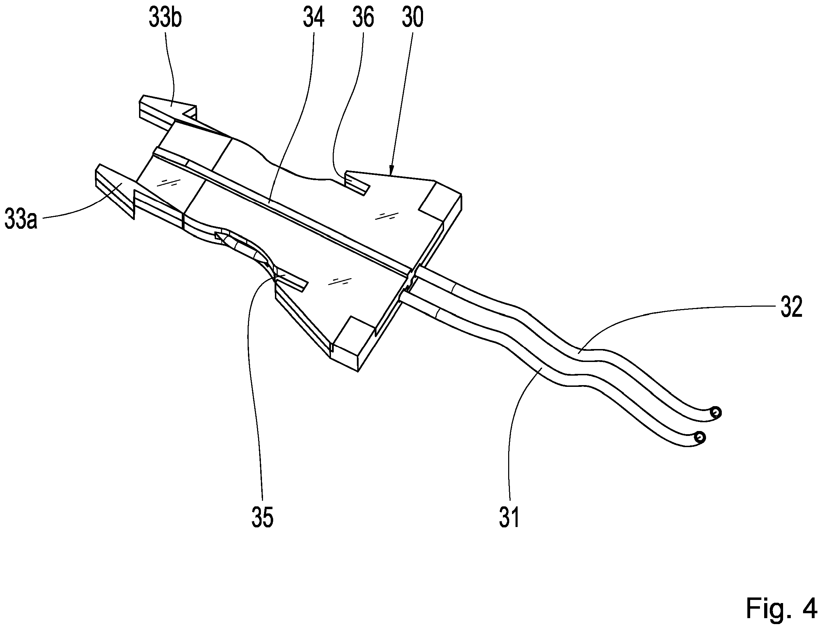

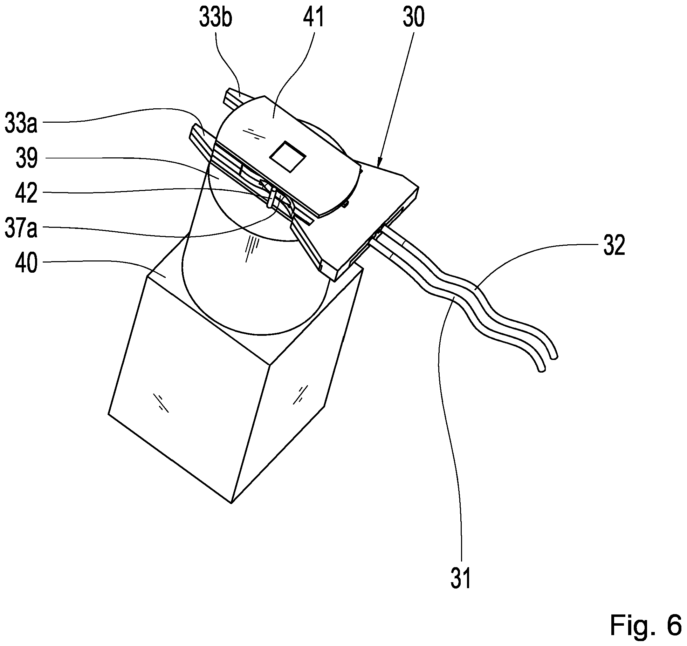

Fig. 4 zeigt ein zweites Ausführungsbeispiel der Erfindung für ein Steckelement 30 mit Anschlussleitungen 31, 32. Auf der Außenseite des Steckelements 30 ist ein Steg 34 für eine Labyrinthdichtung gegenüber dem Kontaktgehäuse 41 (Fig. 6) angeordnet. Für die Fixierung in Längsrichtung sind an dem Steckelement 30 stirnseitig Rast- oder Schnappelemente 33a, 33b vorgesehen. Ferner weist das Steckelement 30 Führungsschlitze 35, 36 für eine Führung und Fixierung am Kontaktgehäuse 41 (Fig. 6) auf.

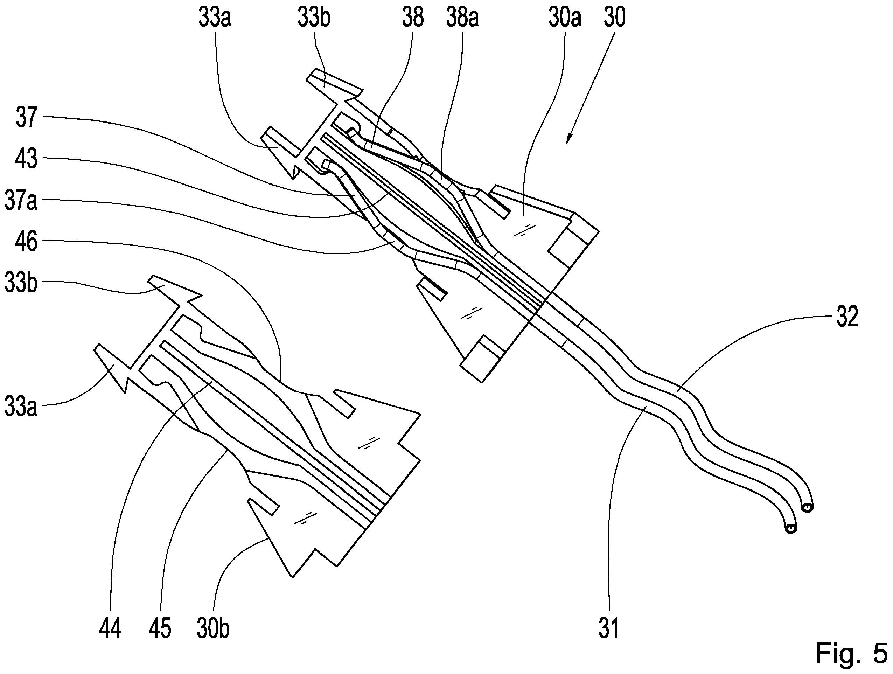

Fig. 5 zeigt die Einzelteile des Steckelements 30, nämlich eine erste Gehäusehälfte 30a, eine zweite Gehäusehälfte 30b sowie zwei Kontaktfederdrähte 37, 38, welche als Feder-Druckkontakte 37a, 38a ausgebildete elektrische Kontakte bilden und elektrisch leitend mit den Anschlussleitungen 31, 32 verbunden sind. Die erste Gehäusehälfte 30a weist einen mittig zwischen den Kontaktfederdrähten 37, 38 angeordneten Steg 43 auf, während die zweite Gehäusehälfte 30b eine korrespondierende Nut 44 aufweist - Steg 43 und Nut 44 bilden eine Labyrinthdichtung als Spanschutz. Die beiden Gehäusehälften 30a, 30b weisen Rastelemente 33a, 33b sowie seitliche Öffnungen 45, 46 für die Feder-Druckkontakte 37a, 38a auf.

Fig. 6 zeigt die Verbindung des Steckelements 30 mit dem Kontaktgehäuse 41 des Aktors 39, welcher auf einem Gehäuse 40 angeordnet ist. Die Rastnasen 33a, 33b sind gegenüber den Stirnseiten des Kontaktgehäuses 41 verrastet und bewirken eine Fixierung des Steckelements 30 in Längs- oder Steckrichtung. Der als Kontaktstift 42 ausgebildete Anschlusskontakt des Aktors 39 wird von dem Feder-Druckkontakt 37a kontaktiert. Die aus den Feder-Druckkontakten resultierenden Druckkräfte quer zur Längsrichtung des Steckelements 30 werden somit von den beiden Kontaktstiften aufgenommen.

### Bezugszeichen

- 10: Steckelement
- 10a: erste Gehäusehälfte
- 10b: zweite Gehäusehälfte
- 11: Anschlussleitung
- 12: Anschlussleitung
- 13: Halteklammer/Rastelement
- 14: Steg (außen)
- 15: Führungsschlitz
- 16: Führungsschlitz
- 17: erster Kontaktdraht
- 17a: elektrischer Kontakt
- 18: zweiter Kontaktdraht
- 18a: elektrischer Kontakt
- 19: Aktor
- 20: Gehäuse
- 21: Kontaktgehäuse
- 22: Kontaktstift
- 23: Steg (innen)
- 24: Nut
- 25: seitliche Öffnung
- 26: seitliche Öffnung

- 30: Steckelement
- 30a: erste Gehäusehälfte
- 30b: zweite Gehäusehälfte
- 31: Anschlussleitung
- 32: Anschlussleitung
- 33a: Rastelement
- 33b: Rastelement
- 34: Steg
- 35: Führungsschlitz
- 36: Führungsschlitz
- 37: erster Kontaktdraht
- 37a: elektrischer Kontakt
- 38: zweiter Kontaktdraht
- 38a: elektrischer Kontakt
- 39: Aktor
- 40: Gehäuse
- 41: Kontaktgehäuse
- 42: Kontaktstift
- 43: Steg (innen)
- 44: Nut
- 45: seitliche Öffnung
- 46: seitliche Öffnung

- a: Längs- oder Steckachse
- F: Druckrichtung

## Patentansprüche

1. Aktor (19,39) für eine Getriebesteuerung eines Getriebes mit einer Vorrichtung zur Herstellung einer elektrischen und mechanischen Verbindung mit dem elektrische Anschlusskontakte (22, 42) aufweisenden Aktor (19, 39), **dadurch gekennzeichnet, dass** die Vorrichtung ein Steckelement (10, 20) aufweist, welches ein Gehäuse (10a, 10b, 20a, 20b) und zwei in dem Gehäuse (10a, 10b, 20a, 20b) angeordnete und fixierte Kontaktfederdrähte (17a, 18a, 27a, 28a) aufweist, wobei das Gehäuse (10a, 10b, 20a, 20b) seitlich angeordnete Öffnungen (25, 26, 45, 46) aufweist und wobei die Kontaktfederdrähte (17a, 18a, 27a, 28a) im Bereich der seitlichen Öffnungen (25, 26, 45, 46) Feder-Druckkontakte (17a, 18a, 27a, 28a) bilden und der Aktor (19, 39) stirnseitig ein Kontaktgehäuse (21, 41) aufweist, in welches das Steckelement (10, 20) einsteckbar und fixierbar ist.

2. Aktor (19,39) nach Anspruch 1, **dadurch gekennzeichnet, dass** die Kontaktfederdrähte (17a, 18a, 27a, 28a) mit elektrischen Leitungen (11, 12) verbunden sind.

3. Aktor (19,39) nach Anspruch 1 oder 2, **dadurch gekennzeichnet, dass** das Steckelement (10, 20) eine Längs- oder Steckachse (a) aufweist und dass die Druckrichtung (F) der elektrischen Feder-Druckkontakte (17a, 18a, 27a, 28a) im Wesentlichen senkrecht zur Längsachse (a) verläuft.

4. Aktor (19,39) nach Anspruch 1, 2 oder 3, **dadurch gekennzeichnet, dass** das Steckelement (10, 30) Rast- oder Schnappelemente (13, 33a, 33b) aufweist.

5. Aktor (19,39) nach einem der Ansprüche 1 bis 4, **dadurch gekennzeichnet, dass** das Steckelement (10, 30) zwei miteinander fügbare Gehäusehälften (10a, 10b, 30a, 30b) umfasst, zwischen denen die Kontaktfederdrähte (17, 18, 37, 38) aufgenommen und fixiert sind.

6. Aktor (19,39) nach einem der Ansprüche 1 bis 5, **dadurch gekennzeichnet, dass** zwischen den Kontaktfederdrähten (17, 18, 37, 38) eine durchgehende Labyrinthdichtung (23, 24, 43, 44) angeordnet ist.

7. Aktor (19,39) nach Anspruch 6, **dadurch gekennzeichnet, dass** die Labyrinthdichtung als durchgehende Nut (24, 44) und ein in die Nut (24, 44) eingreifender Steg (23, 43) ausgebildet ist.

8. Aktor (19, 39) nach einem der Ansprüche 1 bis 7, **dadurch gekennzeichnet, dass** die elektrischen Anschlusskontakte des Aktors (19, 39) als Kontaktstifte (22, 42) ausgebildet sind, die mit den Feder-Druckkontakten (17a, 18a, 37a, 38a) des Steckelements (10, 30) Kontaktierungen bilden.

9. Aktor (19, 39) nach einem der Ansprüche 1 bis 8, **dadurch gekennzeichnet, dass** das Kontaktgehäuse (21, 41) Rast- oder Schnappelemente aufweist, welche mit den Rast- oder Schnappelementen (13, 33a, 33b) des Steckelements (10, 30) korrespondieren.

10. Aktor (19, 39) nach einem der Ansprüche 1 bis 9, **dadurch gekennzeichnet, dass** zwischen dem Kontaktgehäuse (21, 41) und dem Steckelement (10, 30) Labyrinthdichtungen (14, 34) angeordnet sind.

## Claims

1. Actuator (19, 39) for a transmission controller of a transmission that has a device for establishing an electrical and mechanical connection to the actuator (19, 39), said actuator having electrical connection contacts (22, 42), **characterized in that** the device has a plug element (10, 20) which has a housing (10a, 10b, 20a, 20b) and which has two contact spring wires (17a, 18a, 27a, 28a) which are arranged and fixed in the housing (10a, 10b, 20a, 20b), wherein the housing (10a, 10b, 20a, 20b) has laterally arranged openings (25, 26, 45, 46), and wherein the contact spring wires (17a, 18a, 27a, 28a) form spring pressure contacts (17a, 18a, 27a, 28a) in the region of the lateral openings (25, 26, 45, 46) and the actuator (19, 39) has at an end face a contact housing (21, 41) into which the plug element (10, 20) is able to be plugged and in which it is able to be fixed.

2. Actuator (19, 39) according to Claim 1, **characterized in that** the contact spring wires (17a, 18a, 27a, 28a) are connected to electrical lines (11, 12).

3. Actuator (19, 39) according to Claim 1 or 2, **characterized in that** the plug element (10, 20) has a longitudinal or plug axis (a), and **in that** the pressure direction (F) of the electrical spring pressure contacts (17a, 18a, 27a, 28a) extends substantially perpendicularly to the longitudinal axis (a).

4. Actuator (19, 39) according to Claim 1, 2 or 3, **characterized in that** the plug element (10, 30) has latching or snap-fit elements (13, 33a, 33b).

5. Actuator (19, 39) according to one of Claims 1 to 4, **characterized in that** the plug element (10, 30) comprises two housing halves (10a, 10b, 30a, 30b) which are able to be joined together and between which the contact spring wires (17, 18, 37, 38) are accommodated and fixed.

6. Actuator (19, 39) according to one of Claims 1 to 5, **characterized in that** a continuous labyrinth seal (23, 24, 43, 44) is arranged between the contact spring wires (17, 18, 37, 38).

7. Actuator (19, 39) according to Claim 6, **characterized in that** the labyrinth seal is in the form of a continuous groove (24, 44) and a web (23, 43) that engages into the groove (24, 44).

8. Actuator (19, 39) according to one of Claims 1 to 7, **characterized in that** the electrical connection contacts of the actuator (19, 39) are in the form of contact pins (22, 42) which form contacting points with the spring pressure contacts (17a, 18a, 37a, 38a) of the plug element (10, 30).

9. Actuator (19, 39) according to one of Claims 1 to 8, **characterized in that** the contact housing (21, 41) has latching or snap-fit elements which correspond to the latching or snap-fit elements (13, 33a, 33b) of the plug element (10, 30).

10. Actuator (19, 39) according to one of Claims 1 to 9, **characterized in that** labyrinth seals (14, 34) are arranged between the contact housing (21, 41) and the plug element (10, 30).

## Revendications

1. Actionneur (19, 39) pour une commande de transmission d'une transmission avec un dispositif pour établir une liaison électrique et mécanique avec l'actionneur (19, 39) présentant des contacts de raccordement électrique (22, 42), **caractérisé en ce que** le dispositif présente un élément enfichable (10, 20), qui présente un boîtier (10a, 10b, 20a, 20b) et deux fils de contact à ressort (17a, 18a, 27a, 28a) agencés et fixés dans le boîtier (10a, 10b, 20a, 20b), le boîtier (10a, 10b, 20a, 20b) présentant des ouvertures (25, 26, 45, 46) agencées latéralement et les fils de contact à ressort (17a, 18a, 27a, 28a) formant des contacts à ressort et à pression (17a, 18a, 27a, 28a) dans la zone des ouvertures latérales (25, 26, 45, 46) et l'actionneur (19, 39) présentant du côté frontal un boîtier de contact (21, 41) dans lequel l'élément enfichable (10, 20) peut être enfiché et fixé.

2. Actionneur (19, 39) selon la revendication 1, **caractérisé en ce que** les fils de contact à ressort (17a, 18a, 27a, 28a) sont reliés à des lignes électriques (11, 12) .

3. Actionneur (19, 39) selon la revendication 1 ou 2, **caractérisé en ce que** l'élément enfichable (10, 20) présente un axe longitudinal ou d'enfichage (a) et **en ce que** la direction de pression (F) des contacts électriques à ressort et à pression (17a, 18a, 27a, 28a) s'étend essentiellement perpendiculairement à l'axe longitudinal (a) .

4. Actionneur (19, 39) selon la revendication 1, 2 ou 3, **caractérisé en ce que** l'élément enfichable (10, 30) présente des éléments d'encliquetage ou de verrouillage (13, 33a, 33b).

5. Actionneur (19, 39) selon l'une quelconque des revendications 1 à 4, **caractérisé en ce que** l'élément enfichable (10, 30) comprend deux moitiés de boîtier (10a, 10b, 30a, 30b) pouvant être assemblées entre elles, entre lesquelles les fils de contact à ressort (17, 18, 37, 38) sont reçus et fixés.

6. Actionneur (19, 39) selon l'une quelconque des revendications 1 à 5, **caractérisé en ce qu'**un joint labyrinthe continu (23, 24, 43, 44) est agencé entre les fils de contact à ressort (17, 18, 37, 38).

7. Actionneur (19, 39) selon la revendication 6, **caractérisé en ce que** le joint labyrinthe est réalisé sous forme de rainure continue (24, 44) et d'une nervure (23, 43) s'engageant dans la rainure (24, 44).

8. Actionneur (19, 39) selon l'une quelconque des revendications 1 à 7, **caractérisé en ce que** les contacts de raccordement électrique de l'actionneur (19, 39) sont réalisés sous forme de broches de contact (22, 42) qui forment des contacts avec les contacts à ressort et à pression (17a, 18a, 37a, 38a) de l'élément enfichable (10, 30).

9. Actionneur (19, 39) selon l'une quelconque des revendications 1 à 8, **caractérisé en ce que** le boîtier de contact (21, 41) présente des éléments d'encliquetage ou de verrouillage qui correspondent aux éléments d'encliquetage ou de verrouillage (13, 33a, 33b) de l'élément enfichable (10, 30).

10. Actionneur (19, 39) selon l'une quelconque des revendications 1 à 9, **caractérisé en ce que** des joints labyrinthes (14, 34) sont agencés entre le boîtier de contact (21, 41) et l'élément enfichable (10, 30).
